# EUROPEAN PATENT APPLICATION

(11) **EP 1 724 555 A2**
(43) Date of publication of application: **22.11.2006**
(21) Application number: 06004386.6
(22) Date of filing: 03.03.2006
(51) Int. Cl.: G01C 21/36

(54) **Method for displaying information in a navigation system**

(30) Priority: 16.05.2005 KR 2005040819
(71) Applicant: LG Electronics Inc., Yongdungpo-gu Seoul (KR)
(72) Inventor: Jung,Mun Ho 615-701,Woosung 6-danji Apt.,, Seongnam-si,Gyeonggi-do 463-753 (KR); Lee,Joon Hwi, 101-2108,Samho Apt.,, Seoul 150-788 (KR)
(74) Representative: Thum, Bernhard

(57) **Abstract**

A method for guiding a summary route in a navigation system includes determining a detailed travel route of a vehicle and reducing the detailed travel route to create a summary route of the detailed travel route. The summary route and the detailed travel route are displayed on a screen of the navigation system.

## Description

### BACKGROUND

This description relates to navigation systems and methods of operation.

As the number of vehicles, such as cars and trucks, continuously increases, traffic congestion becomes more critical. Particularly, there is a serious problem in that the number of vehicles is increasing much faster than the supporting and necessary infrastructure, such as roads, bridges and the like. Navigation systems have been utilized as one of the solutions for traffic congestion.

The typical navigation system detects a current vehicle location using navigation messages transmitted by a plurality of GPS (Global Positioning System) satellites and detection signals of travel conditions of the vehicle detected by a plurality of sensors, such as gyroscopes and speed sensors, installed in the vehicle. When the current vehicle location is detected, the navigation system matches the detected current vehicle location to map data and then displays the current vehicle location on a screen of a display unit together with a map. In addition, the navigation system provides the functionality of searching for a travel route of the vehicle from a starting location to a destination location using the map data, and guiding the vehicle along the travel route.

Further, the navigation system searches for a certain target point(s) throughout the travel route, such as a crossroad, an underground motorway, an elevated road, and a ramp to an expressway, etc. , ahead of the traveling vehicle along the travel route. If the vehicle approaches the searched target point within a certain distance, the navigation system provides guidance instructions relative to the travel route with audio signals or the like.

In addition, the navigation system determines whether the vehicle deviates from the detected travel route and travels along another, different route. If it is determined that the vehicle deviates from the detected travel route, the navigation system notifies a user of the deviation from the travel route so that the user can appropriately maneuver the vehicle along the proper travel route.

The typical navigation system is used to search for and navigate a vehicle along a travel route so that the user can efficiently use given road networks. In such a navigation system, when the current vehicle location is displayed on the display unit together with a map, the map is displayed in a scale that the user of the vehicle can confirm geographic information around the vehicle. Further, the map is moved and rotated to display the vehicle in such a manner that the vehicle is placed at the center of the map displayed on the display unit and the vehicle travels toward the top of the display unit, e.g., regardless of the actual heading such as north, south, east or west.

### SUMMARY

In one general aspect, a method of guiding a summary route in a navigation system including determining a detailed travel route of a vehicle, eliminating details from the detailed travel route to create a summary route of the detailed travel route, and displaying the summary route and the detailed route on a screen of the navigation system.

Implementations of this aspect may include one or more of the following features.

Determining the detailed travel route includes inputting a starting location and a destination location of the vehicle, and searching for a travel route from the inputted starting location to the destination using map data.

The starting location of the vehicle is a current vehicle location determined through hybrid navigation, wherein hybrid navigation includes receiving navigation messages with a GPS receiver in the vehicle and detecting signals indicative of travel conditions of the vehicle with a sensor unit in the vehicle.

Creating the summary route includes determining a reduction ratio used for reducing the detailed travel route, and reducing the detailed travel route by the determined reduction ratio and creating the summary route.

Determining the reduction ratio includes determining X- and Y-axis distances of the detailed travel route in a state where a Y-axis is set to the true north, calculating reduction ratios used for reducing the determined X- and Y-axis distances into X- and Y-axis sizes of a summary route display area on the screen, and determining the reduction ratio having a highest value among the calculated X- and Y-axis reduction ratios as a reduction ratio of the detailed travel route.

Reducing the detailed travel route includes evenly dividing the entire detailed travel route according to the determined reduction ratio, and creating the summary route by selecting a node or configuration point nearest to a middle portion in each area of the evenly divided detailed travel route.

The summary route is displayed in such a manner that the top of the screen indicates the true north irrespective of the travel direction of the vehicle.

The method may include determining a current vehicle location, and concurrently displaying the determined current vehicle location on the summary route.

The current vehicle location is a location determined through hybrid navigation, wherein hybrid navigation includes receiving navigation messages with a GPS receiver in the vehicle and detecting signals indicative of travel conditions of the vehicle with a sensor unit in the vehicle.

The method may include rendering a map for guiding the detailed travel route of the vehicle to a detailed travel route layer, rendering the summary route onto a summary route layer, synthesizing the rendered detailed travel route layer and the summary route layer, and displaying the synthesized layer on the screen.

The method may include determining a current vehicle location, and concurrently displaying the determined current vehicle location on both the detailed travel route layer and the summary route layer.

The current vehicle location is a location determined through hybrid navigation, wherein hybrid navigation includes receiving navigation messages with a GPS receiver in the vehicle and detecting signals indicative of travel conditions of the vehicle with a sensor unit in the vehicle.

Synthesizing the detailed travel route layer and the summary route layer includes displaying the summary route layer in a summary route display area on the detailed travel route layer with a PIP (Picture-In-Picture) function. Synthesizing the detailed travel route layer and the summary route layer includes displaying the detailed travel route layer on the screen and displaying the summary route layer on a summary route display area of the screen which overlaps the detailed travel route layer on the screen.

Displaying a summary route layer includes displaying a remaining area of the summary route display area without the summary route, without a starting location and a destination location of the vehicle, and a current vehicle location in a transparent or semi-transparent manner.

Displaying a summary route includes alternatively and selectively displaying the summary route on the screen in a toggle mode responsive to a user's command.

The summary route and the detailed travel route are displayed simultaneously.

Other modes are configured to selectively and alternatively display the summary route and the detailed travel route.

In another general aspect, a method of guiding a summary route in a navigation system includes determining a detailed travel route for a vehicle, reducing the detailed travel route to create a summary route, and selectively displaying at least one of the created summary route and the detailed route on a screen of the navigation system, wherein the summary route is displayed in such a manner that a top of the screen indicates a true north direction and the detailed searched travel route is displayed in such a manner that the top of the screen indicates the driving direction of the vehicle.

In another general aspect, a navigation system includes a satellite navigation system receiver, a map data storage unit, a display unit, and a control unit, wherein the satellite navigation system receiver and the map data storage unit are operatively connected to control unit and are configured for providing vehicle position and map data to the control unit.

Implementations of this aspect may include one or more of the following features.

The control unit is configured for determining a detailed travel route for a vehicle. The control unit is configured for reducing the detailed travel route to create a summary route of the detailed travel route. The control unit is configured for selectively displaying at least one of the created summary route and the detailed route on a screen of the display unit, wherein the summary route is displayed in such a manner that a top of the screen indicates a true north direction and the detailed searched travel route is displayed in such a manner that the top of the screen indicates the driving direction of the vehicle.

### BRIEF DESCRIPTION OF THE DRAWINGS

FIG. 1 is a block diagram illustrating the configuration of a navigation system to which a method of guiding a summary route is applied.
FIG. 2 is a flowchart illustrating a method of guiding a summary route.
FIG. 3 is a flowchart illustrating the process of creating a summary route and displaying the created summary route on a display unit in the method of guiding a summary route.
FIGS. 4a and 4b show examples of displaying summary routes on a display unit according to the method of guiding a summary route.

### DETAILED DESCRIPTION

A navigation system or method may include a summary route, wherein the summary route is created by reducing a detailed travel route of a vehicle to an abbreviated or annotated travel route. The summary route is then displayed on a display unit simultaneously or selectively with respect to the detailed travel route. The user of a vehicle navigation system can readily confirm the travel direction of the vehicle by displaying the summary route in such a manner that the top center of the screen showing the summary route indicates true north, e.g., opposed to the top of the screen corresponding to actual vehicle driving direction. The user of a vehicle navigation system can readily confirm how far the vehicle has traveled in the entire travel route by detecting the current vehicle location and displaying the detected current vehicle location on the summary route displayed on the display unit.

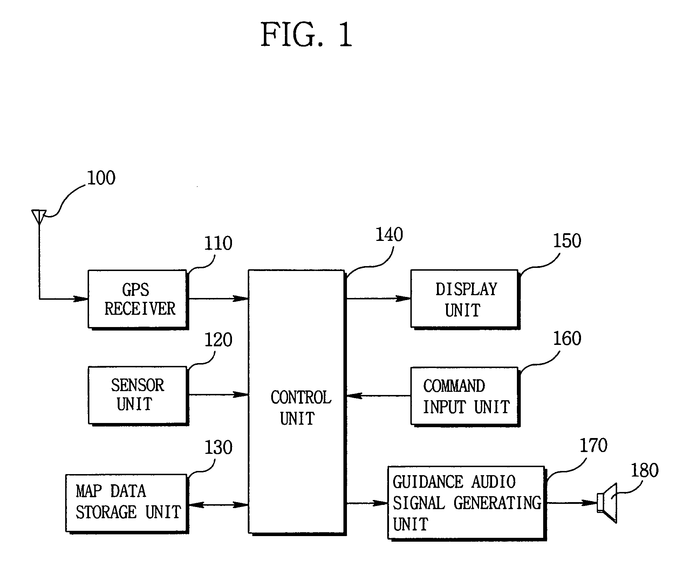

Referring to FIG. 1, a navigation system is shown to include an antenna 100 and a satellite navigation system receiver, such as a GPS (Global Positioning System) receiver. The GPS receiver (110) receives navigation messages transmitted by a plurality of GPS satellites (not shown) through the antenna (100). In addition, the GPS receiver (110) calculates a DOP (Dilution of Precision) value indicating the reliability of the received navigation messages and outputs the calculated value.

The navigation system includes a sensor unit (120) having a gyroscope for detecting the traveling angle of a vehicle and a variety of sensors, such as a speed sensor for detecting the travel speed of the vehicle and the like. The sensor unit (120) detects the travel conditions of the vehicle, and outputs signals indicative of the travel conditions of the vehicle, such as the vehicle is moving at a certain speed and in a certain direction.

The navigation system includes a map data storage unit (130) and a control unit (140). The map data storage unit (130), such as memory containing map data correlated with position data coordinates from a global positioning system, is used to search for a travel route of the vehicle and to navigate the travel route with data stored beforehand in the map data storage unit (130). The control unit (140) determines the current vehicle location through hybrid navigation using navigation messages received by the GPS receiver (110) and detection signals of travel conditions of the vehicle detected by the sensor unit (120). Further, the control unit (140) searches for a detailed travel route, e.g., with turn-by-turn directions, landmarks and map data, from a starting location to a destination location by using the map data stored in the map data storage unit (130). In addition, the control unit (140) controls the matching of the determined current vehicle location with the corresponding map data and displaying of the current vehicle location.

Furthermore, the control unit (140) creates an abbreviated summary route, e.g., without the same level of detail as the detailed travel route, by reducing the detailed travel route and controls displaying the created summary route and/or the detailed travel route. Moreover, the control unit (140) navigates the vehicle along the searched, detailed travel route when the vehicle is moving.

The navigation system includes a display unit (150) and a command input unit (160). The display unit (150) displays the map data, the current location and detailed travel route of the vehicle, and the summary route created under the control of the control unit (140). The command input unit (160) includes a plurality of function keys, generates operation commands in response to the user's manipulation of the plurality of function keys, and inputs the generated operation commands into the control unit (140). Further, the command input unit (160) includes a function key for directing the display of the summary route, generates a command to start and stop displaying the summary route according to the manipulation of the function key, and inputs the generated command into the control unit (140).

A guidance audio signal generating unit (170) generates predetermined guidance audio signals for guiding the operator of the vehicle under the control of the control unit (140). Further, the guidance audio signal generating unit outputs the generated guidance audio signals to a speaker (180) and guides the user of the vehicle along the travel route of the vehicle.

In the foregoing navigation system, the control unit (140) searches for a detailed travel route from a starting location to a destination location of the vehicle by using the map data stored in the map data storage unit (130) when a user orders the system to search for the travel route of a vehicle through the command input unit (160).

The control unit (140) next renders the searched travel route onto a travel route layer and outputs the travel route layer onto the display unit (150) when the search for the travel route of the vehicle has been completed. In addition, the control unit (140) reduces the searched travel route and then creates a summary route. When the summary route has been created, the control unit (140) renders the summary route onto a summary route layer such that the top of the screen indicates the true north. The control unit (140) next outputs the summary route layer onto which the summary route has been rendered to the display unit (150). Accordingly, the display unit (150) synthesizes the detailed travel route layer and the summary route layer and then displays the synthesized layer onto the screen.

When the vehicle travels, the control unit (140) determines the current vehicle location through hybrid navigation using the navigation messages received by the GPS receiver (110) and the detection signals of travel conditions of the vehicle detected by the sensor unit (120). The GPS receiver (110) receives the navigation messages and outputs a DOP value using the received navigation messages. The DOP value is low if the navigation messages are reliable in the current vehicle location, but is high if the navigation messages are unreliable. The control unit (140) determines the reliability of the navigation messages based on the DOP value outputted by the GPS receiver (110). If it is determined that the navigation messages are reliable, the control unit (140) detects the current vehicle location using the navigation messages. If it is determined that the navigation messages are unreliable, the control unit (140) detects the current vehicle location through the hybrid navigation that detects the current vehicle location from the last location of the vehicle detected with the reliable navigation messages by using the detection signals of travel conditions detected by the sensor unit (120).

If the current vehicle location is detected, the control unit (140) matches the detected current vehicle location to the map data, updates the travel route layer by rendering the current vehicle location onto the travel route layer, and then outputs the updated travel route layer to the display unit (150) to display the current vehicle location onto the screen of the display unit. The control unit (140) determines whether a certain target object that requires guidance instructions, such as a crossroad, a branch point or the like, exists within a predetermined distance ahead of the vehicle. If it is determined that a certain target object to be guided exists within a predetermined distance ahead of the vehicle, the control unit (140) controls the guidance audio signal generating unit (170) to generate guidance audio signals for the target object. The generated guidance audio signals are outputted to the speaker (180) such that the vehicle can be guided along the travel route at the relevant target object.

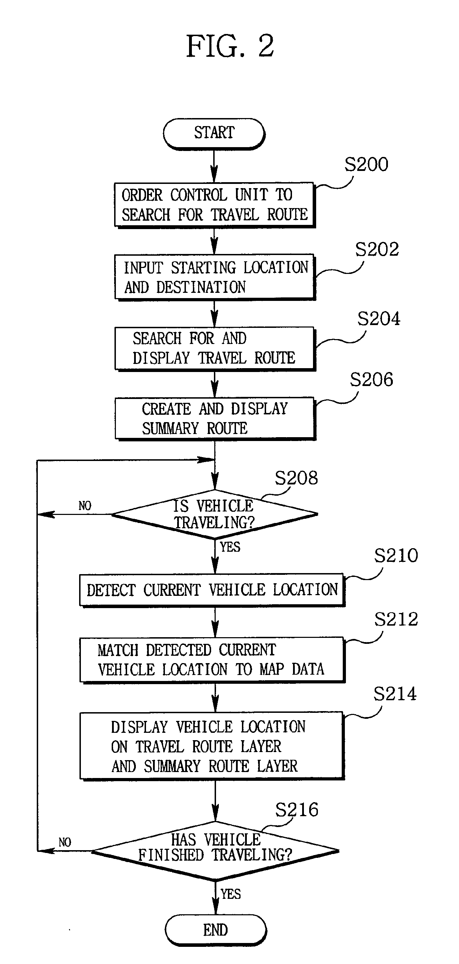

Referring to FIG. 2, a method of guiding a vehicle with a summary route includes, before driving a vehicle, a user manipulating the command input unit (160) and ordering the control unit to search for a detailed travel route of the vehicle (S200). The control unit (140) then controls the command input unit (160) to input a starting location and a destination location of the vehicle (S202). The starting location of the vehicle may be set to the current vehicle location searched through hybrid navigation, e.g., using the navigation messages received by the GPS receiver (110) and the detection signals of travel conditions of the vehicle detected by the sensor unit (120).

When the starting location and the destination location are inputted, the control unit (140) searches for the detailed travel route of the vehicle from the starting location to the destination location using the map data stored in the map data storage unit (130). The control unit renders the map data of a specific region and the current vehicle location to the travel route layer on the basis of the current vehicle location on the searched, detailed travel route. The rendered travel route layer is outputted to the display unit (150), such that the detailed travel route layer can be displayed on the screen of the display unit (150) (S204).

Further, the control unit (140) creates a summary route by reducing the searched entire travel route to a predetermined size, renders the created summary route to the summary route layer, and then outputs the rendered summary route layer to the display unit (150). The display unit (150) then synthesizes the displayed detailed travel route layer and the summary route layer, and displays the synthesized layer onto the screen (S206).

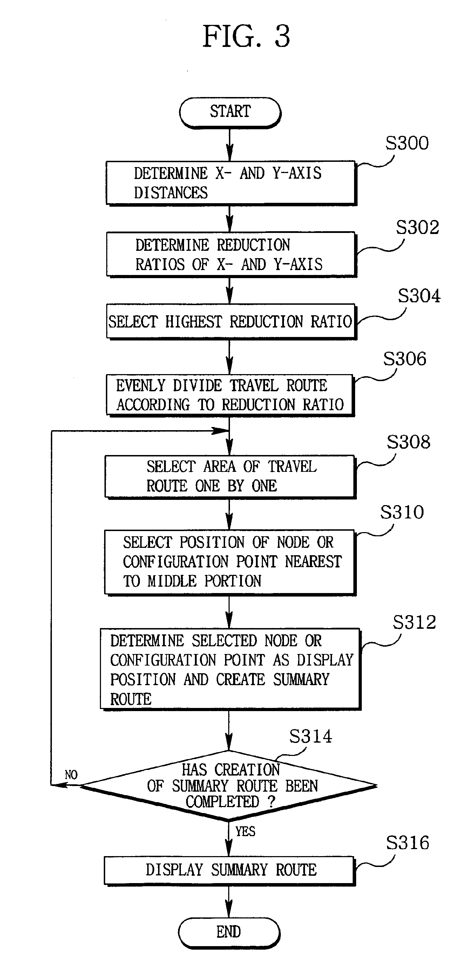

In the step S206 of creating and displaying the summary route, as shown in FIG. 3, the X- and Y-axis distances of the searched entire travel route are determined in a state where the Y-axis is set to the true north (S300). Then, suitable X- and Y-axis reduction ratios are calculated such that the searched entire travel route can be fully displayed on a summary route display area of the screen (S302).

For example, assume that the size of an area where a summary route is displayed on the screen of the display unit (150) is composed of 60 X 60 pixels. Then, the distances of the X- and Y-axis of the entire travel route equally divided respectively by 60 are calculated. Then, the calculated distances are used to determine the X- and Y-axis reduction ratios.

Next, one highest reduction ratio of the calculated reduction ratios is selected (S304). The X- and Y-axis of the searched travel route of the vehicle are evenly divided according to the selected reduction ratio (S306).

Each area of the divided travel route is selected (S308). Next, a node or configuration point nearest to the middle portion of each selected area of the travel route is selected (S310), and a summary route is created by determining the selected node or configuration point as a point where the summary route is displayed (S312).

It is next determined whether the creation of the summary route is completed (S314). If it is determined that the summary route creation has not yet completed, the process returns to step S308, and the previous processes of selecting each area of the divided travel route, determining the selected node or configuration point as a point where the summary route is displayed, and creating a summary route are repeated.

If it is determined in step S314 that the summary route creation has been completed, the created summary route is rendered to the summary route layer. The rendered summary route layer is outputted to the display unit (150), so that the display unit (150) synthesizes the travel route layer and the summary route layer and displays the synthesized layer onto the screen (S316).

The travel route layer and the summary route layer may be synthesized in numerous ways. For example, the display unit (150) presets a summary route display area on a portion of the travel route layer. Then, the display unit puts the summary route layer into the preset summary route display area on the travel route layer using a PIP (Picture In Picture) function and displays the summary route layer on the screen.

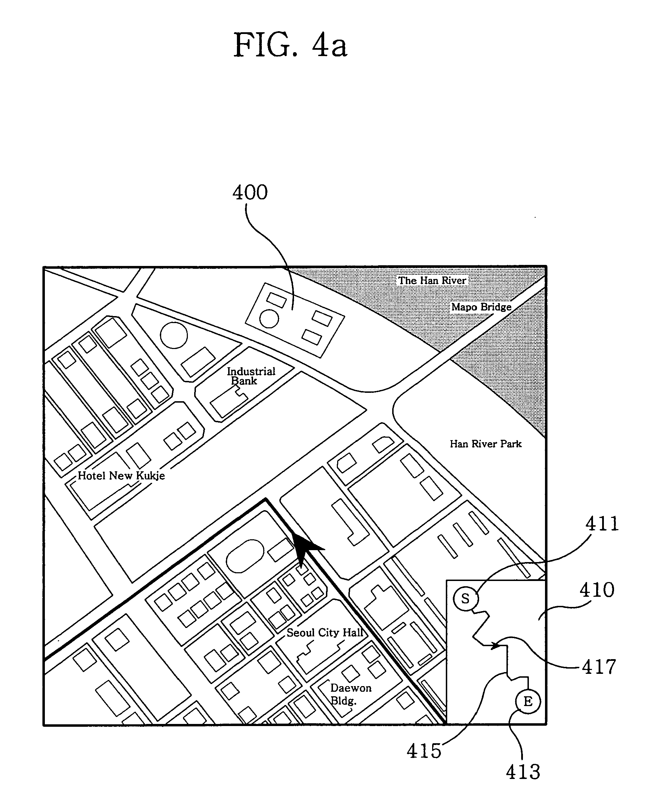

As shown in FIG. 4a, the travel route of the vehicle is then displayed on an entire screen area (400) together with a map, and the summary route including a starting location (411), a destination (413) and an entire travel route (415) is displayed on a summary route display area 410 corresponding to a portion of the screen, e.g., simultaneously with the detailed travel route and overlapping an obstructed portion of the detailed travel route screen.

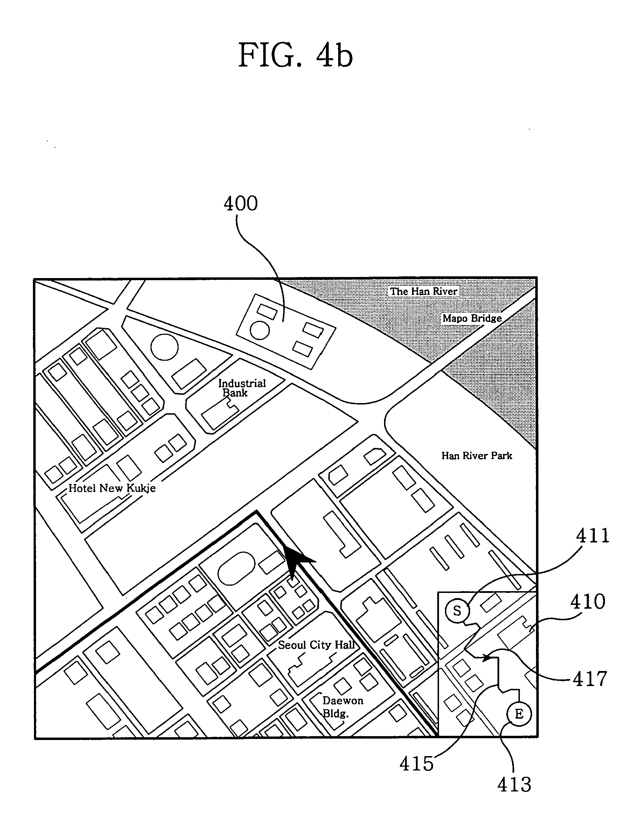

The display unit (150) can first display the travel route layer on the entire screen area (400), as shown in FIG. 4b. Then, the display unit displays the starting location (411), destination (413) and entire travel route (415) on the summary route display area (410) of the screen in a semi-transparent mode (FIG. 4b). At this point, the remaining area of the summary route display area except the starting location (411), destination (413) and entire travel route (415) is processed in a transparent or semi-transparent manner. Then, the user can recognize the map displayed in the summary route display area (410).

The summary route can alternatively appear or disappear on the screen in toggle mode, e.g. , responsive to an input or request from the user pressing a summary route display key (not shown in the figures) provided on the command input unit (160).

In a state where the summary route is displayed on the display unit (150), the control unit (140) determines whether or not the vehicle is traveling (S208). If it is determined that the vehicle is traveling, the control unit (140) detects the current vehicle location through hybrid navigation, e.g., using the navigation messages received by the GPS receiver (110) and the detection signals of travel conditions of the vehicle detected by the sensor unit (120) (S210).

When the current vehicle location has been detected, the control unit (140) matches the detected current vehicle location to the map data stored in the map data storage unit (130) (S212). The control unit (140) renders the current vehicle location, which has been matched to the map data, to the travel route layer and then outputs the rendered travel route layer to the display unit (150). The control unit (140) renders the current vehicle location, which has been matched to the map data, to the summary route layer, and outputs the rendered summary route layer to the display unit (150). Therefore, the current vehicle location (417) can be displayed on the entire travel route (415), as shown in FIG. 4a or 4b (S214).

The control unit (140) determines whether or not the vehicle has finished traveling to the destination location (S216). If it is determined that the vehicle has not yet finished traveling to the destination, the process returns to step S208, and the previous processes of detecting the current vehicle location, rendering the detected current vehicle location to the travel route layer and summary route layer, and displaying the rendered layers are repeated. If it is determined in step S216 that the vehicle has finished traveling to the destination, the control unit (140) completes the operation of guiding the travel route of the vehicle.

As described above, a summary route into which an entire travel route is reduced is created and displayed on a screen when searching for a detailed travel route of a vehicle and when navigating the vehicle along the searched, detailed travel route.

Therefore, a user of the vehicle can easily check how far the vehicle has traveled relative to the overall length of the entire travel route, e.g., based on the summary route displayed on the screen. For example, a typical detailed travel route may include detailed turning instructions and distances so great that the detailed travel route would not otherwise be shown on the same display screen. The summary route permits the user to view the origination, destination and other summary trip information.

The summary route and/or the detailed travel route can be displayed in such a manner that the top, center portion of the screen indicates or is aligned true north. Therefore, the user of the vehicle can also correctly judge a current traveling direction of the vehicle based on the summary route.

It should be understood that the above-described implementations are not limited by any of the details of the foregoing description. Accordingly, other implementations are within the scope of the following claims.

## Claims

1. A method of guiding a summary route in a navigation system, comprising:
determining a detailed travel route of a vehicle;
eliminating details from the detailed travel route to create a summary route of the detailed travel route; and
displaying the summary route and the detailed route on a screen of the navigation system.

2. The method as claimed in claim 1, wherein determining the detailed travel route comprises:
inputting a starting location and a destination location of the vehicle; and
searching for a travel route from the inputted starting location to the destination using map data.

3. The method as claimed in claim 2, wherein the starting location of the vehicle is a current vehicle location determined through hybrid navigation, wherein hybrid navigation comprises receiving navigation messages with a GPS receiver in the vehicle and detecting signals indicative of travel conditions of the vehicle with a sensor unit in the vehicle.

4. The method as claimed in claim 1, wherein creating the summary route comprises:
determining a reduction ratio used for reducing the detailed travel route; and
reducing the detailed travel route by the determined reduction ratio and creating the summary route.

5. The method as claimed in claim 4, wherein determining the reduction ratio comprises:
determining X- and Y-axis distances of the detailed travel route in a state where a Y-axis is set to the true north;
calculating reduction ratios used for reducing the determined X- and Y-axis distances into X- and Y-axis sizes of a summary route display area on the screen; and
determining the reduction ratio having a highest value among the calculated X- and Y-axis reduction ratios as a reduction ratio of the detailed travel route.

6. The method as claimed in claim 4, wherein reducing a detailed travel route comprises:
evenly dividing the entire detailed travel route according to the determined reduction ratio; and
creating the summary route by selecting a node or configuration point nearest to a middle portion in each area of the evenly divided detailed travel route.

7. The method as claimed in claim 1, wherein the summary route is displayed in such a manner that the top of the screen indicates the true north irrespective of the travel direction of the vehicle.

8. The method as claimed in claim 1, further comprising:
determining a current vehicle location; and
concurrently displaying the determined current vehicle location on the summary route.

9. The method as claimed in claim 8, wherein the current vehicle location is a location determined through hybrid navigation, wherein hybrid navigation comprises receiving navigation messages with a GPS receiver in the vehicle and detecting signals indicative of travel conditions of the vehicle with a sensor unit in the vehicle.

10. The method as claimed in claim 1, further comprising:
rendering a map for guiding the detailed travel route of the vehicle to a detailed travel route layer;
rendering the summary route onto a summary route layer;
synthesizing the rendered detailed travel route layer and the summary route layer; and
displaying the synthesized layer on the screen.

11. The method as claimed in claim 10, further comprising:
determining a current vehicle location; and
concurrently displaying the determined current vehicle location on both the detailed travel route layer and the summary route layer.

12. The method as claimed in claim 11, wherein the current vehicle location is a location determined through hybrid navigation, wherein hybrid navigation comprises receiving navigation messages with a GPS receiver in the vehicle and detecting signals indicative of travel conditions of the vehicle with a sensor unit in the vehicle.

13. The method as claimed in claim 10, wherein synthesizing the detailed travel route layer and the summary route layer includes displaying the summary route layer in a summary route display area on the detailed travel route layer with a PIP (Picture-In-Picture) function.

14. The method as claimed in claim 10, wherein synthesizing the detailed travel route layer and the summary route layer includes displaying the detailed travel route layer on the screen and displaying the summary route layer on a summary route display area of the screen which overlaps the detailed travel route layer on the screen.

15. The method as claimed in claim 14, wherein displaying a summary route layer includes displaying a remaining area of the summary route display area without the summary route, without a starting location and a destination location of the vehicle, and a current vehicle location in a transparent or semi-transparent manner.

16. The method as claimed in claim 1, wherein displaying a summary route includes alternatively and selectively displaying the summary route on the screen in a toggle mode responsive to a user's command.

17. The method as claimed in claim 1, wherein the summary route and the detailed travel route are displayed simultaneously.

18. The method as claimed in claim 1, wherein other modes are configured to selectively and alternatively display the summary route and the detailed travel route.

19. A method of guiding a summary route in a navigation system, comprising:
determining a detailed travel route for a vehicle;
reducing the detailed travel route to create a summary route; and
selectively displaying at least one of the created summary route and the detailed route on a screen of the navigation system, wherein the summary route is displayed in such a manner that a top of the screen indicates a true north direction and the detailed searched travel route is displayed in such a manner that the top of the screen indicates the driving direction of the vehicle.

20. A navigation system comprising:
a satellite navigation system receiver;
a map data storage unit;
a display unit; and
a control unit, wherein the satellite navigation system receiver and the map data storage unit are operatively connected to control unit and are configured for providing vehicle position and map data to the control unit, the control unit further including:
means for determining a detailed travel route for a vehicle;
means for reducing the detailed travel route to create a summary route of the detailed travel route; and
means for selectively displaying at least one of the created summary route and the detailed route on a screen of the display unit, wherein the summary route is displayed in such a manner that a top of the screen indicates a true north direction and the detailed searched travel route is displayed in such a manner that the top of the screen indicates the driving direction of the vehicle.
